# EUROPEAN PATENT APPLICATION

(11) **EP 1 295 928 A2**
(43) Date of publication of application: **26.03.2003**
(21) Application number: 01310350.2
(22) Date of filing: 11.12.2001
(51) Int. Cl.: C09K 5/04, C10M 171/00

(54) **Hydrofluorocarbon refrigerant compositions soluble in lubricating oil**

(30) Priority: 21.09.2001 US 960217
(71) Applicant: Honeywell International, Inc., Morristown, New Jersey 07962 (US)
(72) Inventor: Singh, Rajiv R, Getzville, New York 14068 (US); Pham, Hang T, Amhert, New YOrk 14228 (US); Wilson, David P, East Amhert, New York 14051 (US); Metcalf, David A., Whippany, New Jersey 07981 (US)
(74) Representative: Hucker, Charlotte Jane

(57) **Abstract**

The present invention provides hydrofluorocarbon compositions suitable for use in a wide range of applications. The compositions of the present invention tend to be soluble in hydrocarbon lubricating oils, and thus, are especially useful in replacing CFC and HCFC compositions in refrigeration applications.

## Description

### FIELD OF INVENTION

The present invention relates generally to hydrofluorocarbon refrigerant compositions. More specifically, the present invention relates to hydrofluorocarbon refrigerant compositions that are soluble in lubricant oils used traditionally with chlorine-containing refrigerants, and are useful as replacements for chlorine-containing refrigerants.

### BACKGROUND OF THE INVENTION

Hydrofluorocarbons ("HFCs") are of particular interest for use as replacements for chlorine-containing refrigerants, such as chlorofluorocarbon ("CFC") and hydrochlorofluorocarbon ("HCFC") refrigerants, As used herein, the term "refrigerant" refers generally to a compound or a composition of compounds which, in a mechanical system, are compressed and condensed to reject heat into the environment and expanded and evaporated to absorb heat from the environment. These compounds generally have good latent heat of evaporation, good heat transfer coefficients, good stability, little effect on elastomers and plastics used in mechanical equipment, reasonable compression ratios, good solubility in lubricating oils used to lubricate moving parts, and non-flammability.

Of particular interest in this application is the refrigerant's solubility and its non-flammability. The HFC refrigerant must be soluble in the lubricant over a wide range of operating temperatures to lower the viscosity of the lubricant and allow it to flow more easily throughout the system. In the absence of such solubility, lubricants tend to become lodged in the coils of the refrigeration system evaporator, as well as other parts of the system, and thus reduce the system efficiency.

The applicants have come to appreciate that it is particularly advantageous for replacement HFC refrigerants to be not only soluble in lubricants in general, but to be soluble in the particular types of conventional lubricants used with CFC refrigerants. As used herein, the term "conventional lubricants'7 refers generally to lubricants which are known to be relatively soluble and/or miscible with known CFC refrigerants. Examples of commonly used and commercially available conventional lubricants include mineral or hydrocarbon oil, alkyl benzene oil, white or paraffinic oil, and mixtures of two or more thereof.

A primary advantage of an HFC replacement refrigerant being soluble in a conventional lubricant is the ability to continue to use the new refrigerants with such lubricants which tend to be relatively inexpensive and commercially available. Accordingly, the use of soluble HFC refrigerants with conventional lubricants allows for the formulation of environmentally-friendly refrigeration systems at a relatively low cost.

Another advantage of lubricant-soluble HFC refrigerants is their ability to be installed in existing CFC-containing refrigeration systems without the need to remove the lubricant oil from the system. By leaving the existing lubricant behind and recharging the system with just refrigerant, significant savings in time and cost can be realized.

Countering the desire for lubricant-soluble refrigerants is the need to produce non-flammable compositions. Applicants have come to appreciate that solubility and flammability are often competing requirements since components of a composition which tend to increase solubility with lubricants oils also tend to increase the flammability of such compounds.

Therefore, there is a need for an HFC refrigerant that is not only sufficiently soluble in conventional lubricants, but also non-flammable.

### DETAILED DESCRIPTION OF THE INVENTION

The present invention overcomes the aforementioned shortcomings by providing for an HFC refrigerant that is not only soluble in conventional lubricants, but also has low flammability. Specifically, the applicants have identified that an HFC refrigerant comprising pentafluoropropane ("R-125"), 1,1,1,2-tetrafluoroethane ("R-134a"), and cyclopentane has unexpectedly high solubility with conventional lubricant oils while also being sufficiently non-flammable for refrigerant applications.

One aspect of the present invention is an HFC refrigerant suitable for use with conventional lubricant oils. In a preferred embodiment, the present refrigerant comprises R-125, R-134a and cyclopentane.

Another aspect of the present invention is a soluble combination of the refrigerant of the present invention and a lubricant. In a preferred embodiment, the combination comprises a refrigerant comprising R-125, R-134a and cyclopentane, and a lubricant selected from the group consisting of mineral oil, alkyl benzene oil, white (paraffinic) oil, and mixtures of two or more thereof.

Yet another aspect of the invention is a method of replacing CFCs and/or HCFCs in a refrigerant system while retaining the lubricant oil in the system. In a preferred embodiment, the method comprises the steps of: (a) removing the chlorine-containing refrigerant from the refrigeration system while retaining a substantial portion of the lubricant in said system; and (b) introducing to said system a composition comprising R-125, R-134a, and cyclopentane.

Still other uses for the present HFC refrigerant are within the scope of the invention. Examples of such uses include use as aerosol propellants, heat transfer media, gaseous dielectrics, fire-extinguishing agents, foam blowing agents, solvents, and the like,

Applicants have come to appreciate that many refrigerants comprising R-125 and/or R-134a have limited solubility--and thus limited use--in conventional lubricants. Although n-pentane has been added previously to prior art HFC refrigerants to improve the solubility of such refrigerants in conventional lubricants, applicants have discovered that the incorporation of cyclopentane into refrigerants comprising R-125 and R-134a produces refrigerants exhibiting unexpectedly high solubility and an unexpectedly low flammability.

Surprisingly, applicants have discovered that the use of even minor amounts of cyclopentane in refrigerants comprising R-125 and R-134a improves drastically the solubility of such refrigerants in conventional lubricants. For examplc, compositions of the present invention comprising as little as 1.5 weight percent ("wt%"), based on the entire weight of the composition, have been found to have improved solubilities in conventional lubricants of up to 10 wt% over R-125/R-134a refrigerants without cyclopentane. This represents an increase in solubility equivalent to six times the amount of cyclopentane incorporated into the refrigerant. Such results are unexpected.

Accordingly, the present invention provides refrigerant compositions comprising R-125, R-134a and cyclopentane. Those of skill in the art will recognize that the solubility of the compositions of the present invention in conventional lubricants will depend on a number of variables including the relative amounts of R-125, R-134a and cyclopentane used in the refrigerant composition, as well as, the composition of the lubricant. In addition, the solubility of the present compositions in conventional lubricants will vary depending on temperature and pressure.

According to certain preferred embodiments, the compositions of the present invention have a solubility in conventional lubricants of at least about 10 wt%, based on the total weight of present composition and lubricant. More preferably, the present compositions have a solubility of at least about 15 wt%, and even more preferably at least about 20 wt%. In certain especially preferred embodiments, the present compositions have a solubility of about 25 wt%. It has also been found that the solubility of the refrigerant of the present invention is realized over a wide range of temperatures and pressures, for example, from about -40°C to about 60 °C and from about 0 psig to about 500 psig.

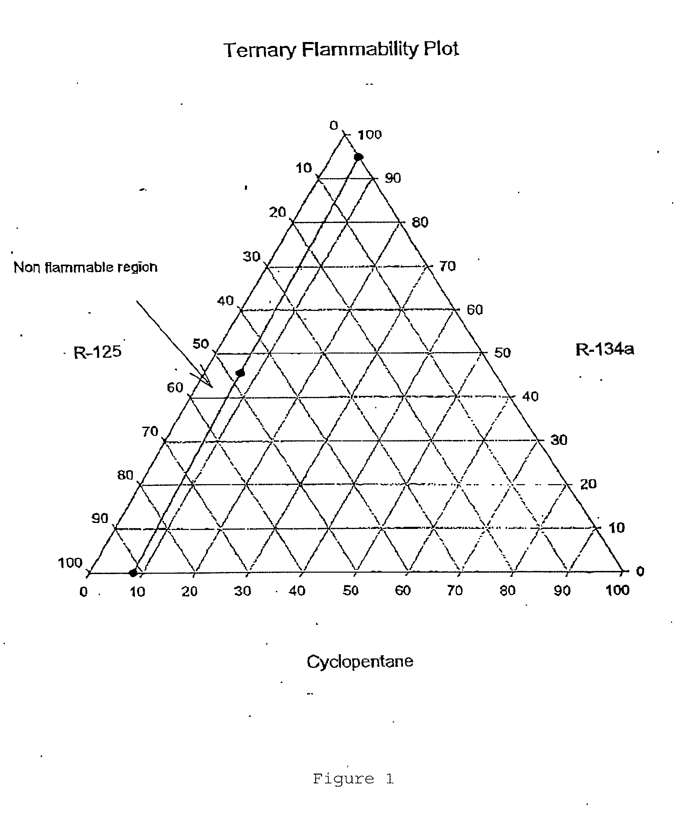

Furthermore, applicants have discovered unexpectedly that the lubricant-soluble compositions of the present invention are non-flammable. Figure I is a ternary flammability plot for compositions comprising R-125, R-134a and cyclopentane. The plot depicts graphically the range of flammable and non-flammable compositions comprising R-125, R-134a and cyclopentane, as measured using the apparatus described in Underwriter Laboratories Refrigerant Flammability test method 2182. As indicated in Fig. 1, compositions falling to the left of the graphed line are considered non-flammable, that is, they have a zero flame limit.

As illustrated in Fig 1, various compositions containing as much as about 8 wt% are non-flammable. Preferably, the refrigerant compositions of the present invention fall within the non-flammable region. According to certain embodiments, the refrigerant of the present invention comprises from about 35 to about 80 parts by weight of R-125, from about 15 to about 60 parts by weight of R-134a, and from about 0.1 to about 5 parts by weight of cyclopentane. In certain preferred embodiments, the refrigerant comprises from about 47 to about 80 parts by weight of R-125, from about 17 to about 60 parts by weight of R-134a, and from about 0.1 to about 3 parts by weight of cyclopentane. In even more preferred embodiments, the refrigerant comprises from about 48 to about 80 parts by weight of R-125, from about 18 to about 60 parts by weight of R-134a, and from about 0.1 to about 2 parts by weight of cyclopentane. According to other embodiments, the present refrigerant compositions consist essentially of R-125, R-134a and cyclopentane in various proportions and in the preferred ranges mentioned above.

In addition to R-125, R-134a and cyclopentane, the compositions of the invention may also contain additives such as oxidation resistance and thermal stability enhancers, corrosion inhibitors, metal deactivators, lubricity additives, viscosity index enhancers, pour and/or floc point depressants, detergents, dispersants, antifoaming agents, anti-wear agents, extreme pressure resistant additives, and combinations of two or more thereof.

Examples of oxidation resistance and thermal stability enhancers suitable for use in the present invention include, for example: diphenyl-, dinaphthyl-, and phenylnaphthyl-amines, in which the phenyl and naphthyl groups can be substituted, e.g., N.N'-diphenyl phenylenediamine, p-octyldiphenylamine, p,p-dioctyldiphenylamine, N-phenyl-1-naphthyl amine, N-phenyl-2-naphthyl amine, N-(p-dodecyl)phenyl-2-naphthyl amine, di-1-naphthylamine, and di-2-naphthylamine, phenothazines such as N-alkylphenothiazines; imino(bisbenzyl); hindered phenols such as 6-(t-butyl) phenol, 2,6-di-(t-butyl) phenol, 4-methyl-2,6-di-(t-butyl) phenol, 4,4'-methylenebis(2,6-di-{t-butyl} phenol); combinations of two or more thereof, and the like.

Examples of cuprous metal deactivators suitable for use in the present compositions include, for example: imidazole, benzamidazole, 2-mercaptobenzthiazole, 2,5-dimercaptothiadiazole, salicylidine-propylenediamine, pyrazole, benzotriazole, tolutriazole, 2-methylbenzamidazole, 3,5-imethyl pyrazole, and methylene bis-benzotriazole. Benzotriazole derivatives are preferred. Other examples of more general metal deactivators and/or corrosion inhibitors include organic acids and their esters, metal salts, and anhydrides, e.g., N-oleyl-sarcosine, sorbitan mono-oleate, lead naphthenate, dodecenyl-succinic acid and its partial esters and amides, and 4-nonylphenoxy acetic acid; primary, secondary, and tertiary aliphatic and cycloaliphatic amines and amine salts of organic and inorganic acids, e.g., oil-soluble alkylammonium carboxylates; heterocyclic nitrogen containing compounds, e.g., thiadiazoles, substituted imidazolines, and oxazolines; quinolines, quinones, and anthraquinones; propyl gallate; barium dinonyl naphthalene sulfonate; ester and amide derivatives of alkenyl succinic anhydrides or acids, dithiocarbamates, dithiophosphates; amine salts of alkyl acid phosphates and their derivatives.

Examples of suitable lubricity additives include long chain derivatives of fatty acids and natural oils, such as esters, amines, amides, imidazolines, and borates.

Examples of suitable viscosity index enhancers include polymethacrylates, copolymers of vinyl pyrrolidone, as well as, methacrylates, polybutenes, and styrene-acrylate copolymers.

Examples of suitable pour point and/or floc point depressants include polymethacrylates such as methacrylate-ethylene-vinyl acetate terpolymers; alkylated naphthalene derivatives; and products of Friedel-Crafts catalyzed condensation of urea with naphthalene or phenols.

Examples of suitable detergents and/or dispersants include polybutenylsuccinic acid amides; polybutenyl phosphonic acid derivatives; long chain alkyl substituted aromatic sulfonic acids and their salts; and metal salts of alkyl sulfides, of alkyl phenols, and of condensation products of alkyl phenols and aldehydes.

Examples of suitable anti-foam agents include silicone polymers and acrylates.

Examples of suitable anti-wear and extreme pressure resistance agents include sulfurized fatty acids and fatty acid esters, such as sulfurized octyl tallate; sulfurized terpenes; sulfurized olefins; organopolysulfides; organo phosphorus derivatives including amine phosphates, alkyl acid phosphates, dialkyl phosphates, aminedithiophosphates, trialkyl and triaryl phosphorothionates, trialkyl and triaryl phosphines, and dialkylphosphites, e.g., amine salts of phosphoric acid monohexyl ester, amine salts of dinonylnaphthalene sulfonate, triphenyl phosphate, tranaphthyl phosphate, diphenyl cresyl and dicresyl phenyl phosphates, naphthyl diphenyl phosphate, triphenylphosphorothionate; dithiocarbamates, such as an antimony dialkyl dithiocarbamate; chlorinated and/or fluorinated hydrocarbons, and xanthates.

An effective amount of the foregoing additive types is generally in the range from about 0.01 to about 5% for the antioxidant component, about 0.01 to about 5% for the corrosion inhibitor component, from about 0.001 to about 0.5% for the metal deactivator component, from about 0.5 to about 5% for the lubricity additives, from about 0.01 to about 2% for each of the viscosity index enhancers and pour and/or floc point depressants, from about 0.1 to about 5% for each of the detergents and dispersants, from about 0.001 to about 0.1% for anti-foam agents, and from about 0.1 to about 2% for each of the anti-wear and extreme pressure resistance components. All these percentages are by weight and are based on the total composition. It is to be understood that more or less than the stated amounts of additives may be more suitable to particular circumstances, and that a single molecular type or a mixture of types may be used for each type of additive component. As used herein, he term "effective amount" means the amount of each component which upon combination with the other component or components, results in the formation of the present compositions.

Many of the aforementioned additives are multifunctional. For example, certain additives may impart both anti-wear and extreme pressure resistance properties, or function both as a metal deactivator and a corrosion inhibitor. Cumulatively, all additives preferably do not exceed about 8% by weight, or more preferably do not exceed about 5% by weight, of the total composition.

The present invention further provides a soluble combination of a refrigerant of the present invention and a lubricant. Suitable lubricating oils for use in the soluble combination include mineral oil, hydrocarbon oil, alkylbenzene oil, white or paraffinic oil, and mixtures of two or more thereof. The lubricating oil is preferably present in an amount of from about 1 to about 60 weight percent, based on the total weight of the combination. More preferably, the lubricating oil is present in an amount of from about 10 to about 50 weight percent.

The compositions of the present invention are suitable for a wide range of uses and are particularly well suited for use in refrigeration systems. As used herein the term "refrigeration system" refers generally to any system or apparatus, or any part or portion of such a system or apparatus, which condenses and expands a refrigerant to effect heat transfer. Such systems typically have a low pressure portion in which the refrigerant is expanded and vaporized, thereby absorbing heat, and a high pressure portion in which the refrigerant is compressed and condensed, thereby expending heat. Examples of such systems include air conditioners, heat pumps, and refrigerators.

According to certain embodiments, the present invention provides a method for recharging a refrigerant system that contains a chlorine-containing refrigerant composing the steps of: (a) removing the chlorine-containing refrigerant from the refrigeration system; and (b) introducing to said system an HFC refrigerant of the present invention.

With respect to step (a), it is preferable to perform the removal step in the low pressure portion of the system to avoid the need for pressure-rated evacuation systems and connectors and to take advantage of the volatility of the refrigerants (the boiling point of refrigerants are generally under 10°C) and their tendency to escape from the system if allowed. Low pressure removal of CFC refrigerants may be achieved in any of a number of ways, including, for example, by using a refrigerant recovery system (such as that commercially available through Robinair of Ohio) to pump chlorine-containing refrigerants in the gaseous state out of the system, or by using a cooled, evacuated refrigerant container connected to the low pressure portion of a refrigeration system to draw gaseous refrigerant from the system. To aid in the removal of CFC refrigerant, it may be preferable to use a compressor to pump the refrigerant from the system to a container. The refrigerant also may be flushed from the system using the replacement HFC refrigerant.

Those of skill in the art will recognize that the refrigeration systems used in the methods of the present invention generally comprise a compressor and an expansion chamber in which both a refrigerant and lubricant are contained and through which the refrigerant and lubricant can be circulated. In a preferred embodiment, the removal step (a) comprises removing a chlorine-containing refrigerant from a refrigeration system while leaving a substantial portion of the lubricant behind. As used herein, the term "substantial portion" refers generally to a quantity of lubricant which is at least about 50% (by weight) of the quantity of lubricant contained in the refrigeration system prior to removal of the chlorine-containing refrigerant. Preferably, the substantial portion of lubricant in the system is a quantity of at least about 70% of the lubricant contained originally in the refrigeration system, and, more preferably, a quantity of at least about 90%. In circumstances in which it is desirable to leave the existing lubricant behind, it is preferable to exploit the relatively high volatility of the refrigerant compared to the lubricant (the boiling point of mineral oils are generally over 200 °C), and to evacuate the CFC refrigerant as a gas while the lubricant remains behind in the liquid phase. Thus, the techniques discussed above for removing the refrigerant from system as a vapor are preferred over removing the refrigerant as a liquid.

With respect to step (b), any method for introducing the refrigerant composition to a refrigeration system can be used in the present invention. Again, it is preferable to introduce the HFC refrigerant to the system in the low pressure portion of the system to avoid the need for high pressure-rated equipment. For example, one method comprises attaching a refrigerant container to the low-pressure portion of a refrigeration system and turning on the refrigeration system compressor to pull the refrigerant into the system. In such embodiments, the refrigerant container may be placed on a scale such that the amount of refrigerant composition entering the system can monitored. When a desired amount of refrigerant composition has been introduced into the system, charging is stopped.

The compositions of the present invention can be used in refrigeration and heat pump applications to produce cooling and/or heating, via methods well-known in the art. For example, as will be recognized by those of skill in the art, cooling and heat is traditionally produced by the condensing and evaporating of refrigerant compositions in refrigerant/heating systems. Accordingly, the compositions of the present invention may be used to effect heat transfer via a method comprising the steps of: (a) condensing the refrigerant of the present invention; (b) removing heat from the refrigerant; (c) evaporating the refrigerant; and (d) adding heat to the refrigerant.

### EXAMPLES

In order to illustrate, in a non-limiting manner, the present invention is described in connection with the following examples of the present compositions.

### Example 1

The following example illustrates the non-flammability characteristics associated with compounds of the present invention.
The critical flammability ratio (C.F.R.) of compositions comprising R-125, R-134a, and cyclopentane are determined using the apparatus described in Underwriter Laboratories Refrigerant Flammability test method 2182 at 60°C. C.F.R. allows determination of the maximum amounts of flammable materials can be added to a mixture before the mixture itself becomes flammable. Cyclopropane, a flammable material, was added to R-125, R-134 and a mixture of R-125 and R-134a. The resulting flammability data is reported in Table 1 below. In addition, Figure 1 illustrates graphically the range of flammable and non-flammable compositions comprising R-125/R-134a and cyclopentane. As indicated, those compositions falling to the left of the plotted line represent the non-flammable compositions.

**Table 1**

| Temp (°C) | Refrigerant | Wt.% Cyclopentane |
|---|---|---|
| 60 | R-134a (94.8wt.%) | 5.2 |
| 60 | R-125 (91.8wt.%) | 8.2 |
| 60 | R-134a (45.5wt.%)/ R-125 (47.7wt.%) | 6.8 |

### Example 2

The following example illustrates the relatively high solubility of the HFC refrigerant as manifested by improved lubricant circulation observed in air conditioning systems comprising a composition of the present invention over systems comprising prior art 407C refrigerants.

A composition of the present invention comprising 61.5 wt.% R-125, 35 wt.% R-134a and 3.5 wt.% cyclopentane ("Comp. A") and an R-407C (a non-azeotropic blend of difluoromethane (R-32), R-125 and R-134a) refrigerant were prepared. The present composition and R-407C refrigerant were placed in refrigeration machines containing mineral oil (Copeland blended white oil, commercially available from Copeland as Catalog No. 999-5170-31) and tested to measure oil return within the systems.

Testing was performed in a 2 ton air conditioner system setup similar to the unit reported in Report DOE/CE/23810-71 "Study of Lubricant Circulation in HVAC Systems," March 1995-April 1996 (author Frank R. Biancardi et. al.; prepared for Air Conditioning and Refrigeration Technology Institute Under ARTI/MCLR Project No. 665-53100) except that, instead of equal size risers, three different size risers (3/4", 7/8" and 1 1/8") were used to allow a greater variety of velocities. Also, the ability to pump oil from the compressor sump into the compressor discharge line was added. Using a hand pump, 90cc of oil from the sump was injected into the compressor discharge line. By observing the oil level in the compressor sump versus time, it was noticed that the oil return was considerably faster with the present composition without any significant effect on capacity or coefficient of performance ("COP"). The capacity and COP data are shown in Table 1 below.

**Table 1**

| Composition | Capacity (tons) | COP |
|---|---|---|
| R-407C | 1.70 | 2.9 |
| Comp. A | 1.63 | 2.8 |

Therefore, the ability of the refrigerant of the present invention to increase oil return over R-407C is indicative of its greater solubility.

### Example 3

The following example also illustrates the relatively higher solubility of compositions of the present invention as compared to an R-407C refrigerant.

Three refrigerant compositions were prepared and tested for solubility in mineral oil. The first composition ("A") was an R-407C refrigerant, the second composition ("B") was comprised of 25 wt% R-134a, 70 wt% R-125, and 5 wt% cyclopentane, and the third composition ("C") was comprised of 35 wt% R-134a, 63 wt% R-125, and 2 wt% cyclopentane. The solubility of the compositions was tested by mixing the refrigerants with a mineral oil (C3 oil, an oil available commercially from Calgon Corp. having a viscosity of 32 centistokes at 37 °C) in sealed glass tubes and observing the concentrations at which two liquid phases appeared. The maximum solubility observed for each of the three refrigerants in mineral oil was: A=15 wt%, B=25 wt%, and C=25 wt%.

### Example 4

The following example illustrates the relatively high solubility of the HFC refrigerant as manifested by improved lubricant circulation observed in heat pump systems comprising a composition of the present invention over systems comprising prior art R-417A refrigerants.

Three refrigerants were prepared for use and testing in a heat pump system. The first refrigerant was a composition of the present invention comprising 63 wt.% R-125,35.5 wt.% R-134a and 1.5 wt.% cyclopentane, the second was an R-417A (composed of 46.5% R-125, 50.0% R-134a, and 3.5% n-butane) refrigerant, and the third was an R-22 refrigerant.

The refrigerants were introduced into a heat pump comprising a compressor manufactured by Copeland Corporation (model number ZR22K3-PFV) and a suction accumulator manufactured by Parker Hannifan (model number PA5093-9-6C). Evaporator and condenser coils were sized and manufactured to manage the 7kW capacity of the compressor. Both the suction accumulator and compressor were modified to include sight glasses or tubes to view inside the accumulator and to determine the oil level in the compressor.

Tests were run in both heating and cooling modes. All three refrigerants returned typical hydrocarbon mineral oil to compressor in the cooling mode at standard air conditioning conditions and in the heating mode at high temperature heating conditions. However at low outdoor temperature heating conditions (at or below -7°C) the R-417A mixture starting accumulating oil and liquid refrigerant in the suction accumulator. Due to the formation of two layers in this component with the oil-rich layer floating on top of the refrigerant-rich layer, the oil was never in contact with the oil return hole in the bottom of the suction tube so oil did not get back to the compressor. This was observed by watching the oil layer grow in the accumulator and the oil level decrease in the compressor sump. The system had to be shutdown due to the concern of running the compressor without sufficient oil. This behavior was not seen when the system operated with the cyclopentane mixture or when running the baseline R-22 tests.

## Claims

1. A composition comprising a refrigerant, said refrigerant comprising at least from about 35 to about 80 parts by weight of R-125, from about 15 to about 60 parts by weight of R-134a, and from about 0.1 to about 5 parts by weight of cyclopentane.

2. The composition of claim 1, wherein said refrigerant comprises from about 47 to about 80 parts by weight of R-125, from about 17 to about 60 parts by weight of R-134a and from about 0.1 to about 3 parts by weight of cyclopentane.

3. The composition of claim 2, wherein said refrigerant comprises from about 48 to about 80 parts by weight of R-125, from about 18 to about 60 parts by weight of R-134a and from about 0.1 to about 2 parts by weight of cyclopentane.

4. The composition of any preceding claim, further comprising an additive selected from the group consisting of oxidation resistance enhancers, thermal stability enhancers, corrosion inhibitors, metal deactivators, lubricity additives, viscosity index enhancers, pour depressants, floc point depressants, detergents, dispersants, antifoaming agents, anti-wear agents, extreme pressure resistant additives, and combinations of two or more thereof.

5. The composition of any preceding claim, further comprising a lubricating oil.

6. The composition of claim 5, wherein said lubricating oil comprises from about 1 to about 60 percent by weight of the composition.

7. The composition of claim 6, wherein said lubricating oil comprises from about 10 to about 50 percent by weight of the composition.

8. The composition of claim 1, wherein said refrigerant consists essentially of from about 35 to about 80 parts by weight of R-125, from about 15 to about 60 parts by weight of R-134a, and from about 0.1 to about 5 parts by weight of cyclopentane.

9. A method of recharging a refrigeration system comprising the step of:
(a) removing a chlorine-containing refrigerant from said refrigeration system; and
(b) introducing to said system a composition as defined in any preceding claim.

10. A method of recharging a refrigeration system comprising the steps of:
(a) removing a chlorine-containing refrigerant from the refrigeration system while retaining a substantial portion of a lubricant oil in said system; and
(b) introducing to said system a composition as defined in any of claims 1 to 8.

11. A method of effecting heat transfer comprising the steps of:
(a) condensing a composition comprising a refrigerant as defined in any of claims 1 to 3;
(b) removing heat from the condensed refrigerant;
(c) evaporating the refrigerant; and
(d) adding heat to the refrigerant during evaporation.
